# EUROPEAN PATENT APPLICATION

(11) **EP 0 621 116 A1**
(43) Date of publication of application: **26.10.1994**
(21) Application number: 94100383.2
(22) Date of filing: 12.01.1994
(51) Int. Cl.: B29B 9/12, B29C 67/16, B29C 47/04

(54) **Method of preparing a grained plastic material assorted in color for making plastic products having a wood grain**

(30) Priority: 20.04.1993 CN 93105019
(71) Applicant: Chen, James Hsing-Larng, Tien Chung Town, Changhua County (TW)
(72) Inventor: Chen, James Hsing-Larng, Tien Chung Town, Changhua County (TW)
(74) Representative: Grünecker, Kinkeldey, Stockmair & Schwanhäusser Anwaltssozietät

(57) **Abstract**

A plastic material preparing method includes steps of: i) preparing a supplementary material by mixing plastic resins with a pigment powder of a dark color and then letting the mixture thus obtained be processed into a colored, grained supplementary material through a pilling machine; ii) preparing a base material by mixing plastic resins with a pigment powder of a light color and then letting the mixture thus obtained be processed into a colored, grained base material through a pilling machine; and iii) mixing the supplementary material with the base material into a grained plastic material assorted in color for making plastic products having a wood grain.

## Description

### BACKGROUND OF THE INVENTION

The present invention relates to a method of preparing a grained plastic material assorted in color, that can be used for making plastic products having a wood grain by means of an extruding machine.

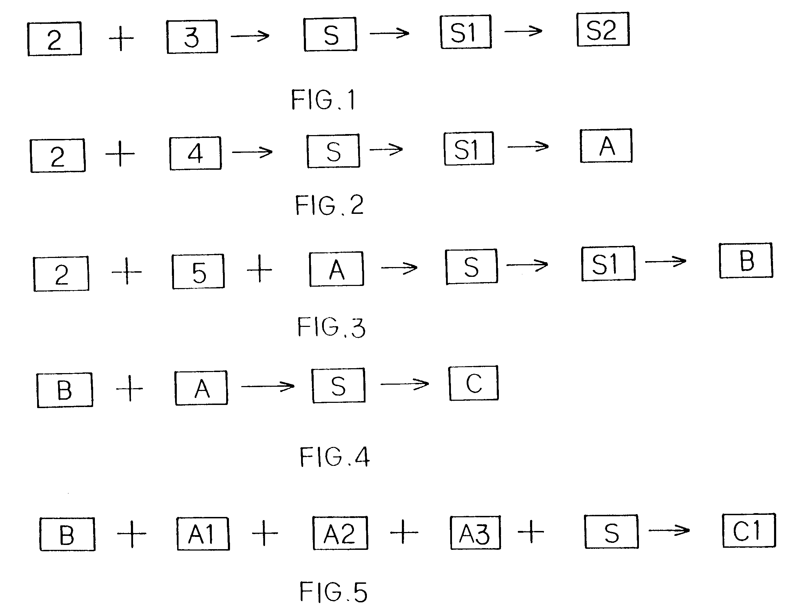

Regular plastic resins are commonly transparent. When these plastic resins are directly put in an extruding machine or any plastics processing machine, the finished products thus obtained are also transparent. In order to obtain a finished plastic product having a specific color, transparent plastic resins must be processed into a colored, grained plastic material. According to conventional method, this colored, grained plastic material is obtained by mixing transparent plastic resins with a powder pigment in a mixer and then putting the mixture thus obtained in a pilling machine for making into the desired colored, grained plastic material (see Figure 1). However, such a colored, grained plastic material can only be used for making plastic products having a single color. A colored, grained plastic material obtained according to the aforesaid method cannot be used for making plastic products having a wood grain. Therefore, a printing process must be employed to print little lines and markings on the plastic products.

### SUMMARY OF THE INVENTION

The present invention has been accomplished under the aforesaid circumstances. It is therefore the principal object of the present invention to provide a method of preparing a grained plastic material assorted in colors for making plastic products having a wood grain by means of an extruding machine.

According to one aspect of the present invention, the plastic material preparing method comprises a first step to prepare a supplementary material by mixing plastic resins with a pigment powder of a dark color and then letting the mixture thus obtained be processed into a colored, grained supplementary material through a pilling machine, a second step to prepare a base material by mixing plastic resins with a pigment powder of a light color and then letting the mixture thus obtained be processed into a colored, grained base material through a pilling machine, and a third step to mix the supplementary material with the base material at 1:10 by weight into a grained plastic material assorted in color. When finished, the supplementary material and the base material have different softness and melting point. Therefore, a plastic product which is made from this grained plastic material assorted in color shows a wood grain on the outside surface.

In an alternate form of the present invention, the plastic material preparing method comprises a first step to prepare a plurality of base materials by mixing plastic resins with pigment powder of different dark colors separately and then letting the mixtures thus obtained be separately processed into colored, grained base materials through a pilling machine, a second step to prepare a base material by mixing plastic resins with a pigment powder of a light color and then letting the mixture thus obtained be processed into a colored, grained base material through a pilling machine; and a third step to mix the supplementary materials with the base material into a grained plastic material assorted in color. A plastic product made from the aforesaid finished material C has a wood grain showing striking differences between the lines and markings thereon.

### BRIEF DESCRIPTION OF THE DRAWINGS

Fig. 1 is a block diagram showing the preparation of a colored, grained plastic material according to the prior art;
Fig. 2 is a block diagram showing the preparation of a colored, grained base plastic material according to the present invention;
Fig. 3 is a block diagram showing the preparation of a colored, grained supplementary plastic material according to the present invention;
Fig. 4 is a block diagram showing the preparation of a finished material according to the present invention; and
Fig. 5 is a block diagram showing an alternate form of the preparation of a finished material according to the present invention.

### DETAILED DESCRIPTION OF THE PREFERRED EMBODIMENTS

Referring to Figure 2, a certain quantity (for example: 100kgs) of plastic resins and a first powder pigment mixture (for example: a mixture containing 150kgs of garnet powder pigment and 32kgs of black powder pigment) are mixed in a mixer for about 15 minutes, and then processed into a colored, grained, plastic material through a pilling machine. This colored, grained plastic material is hereinafter referred to as supplementary material A.

Referring to Figure 3, a certain quantity (for example: 100kgs) of plastic resins and a second powder pigment mixture (for example: a mixture containing 72kgs of yellow powder pigment and 80kgs of apricot powder pigment) and a certain quantity (about 3kgs) of the aforesaid supplementary material A are mixed in a mixer for about 15 minutes, and then processed into a colored, grained plastic material through a pilling machine. This colored, grained plastic material is hereinafter referred to as base material B.

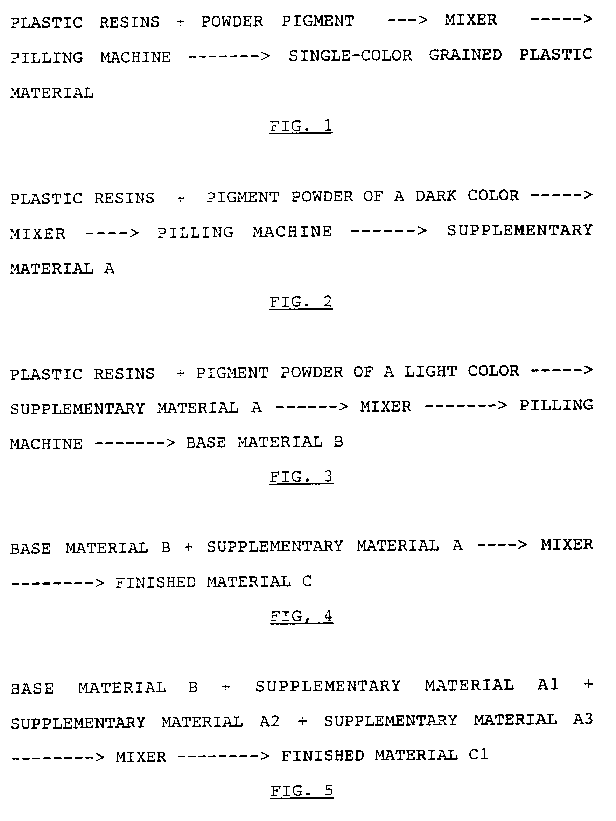

Referring to Figure 4, one portion of the supplementary material A by weight and ten portions of the base material B by weight are then mixed in a mixer for about 15 minutes so as to form into a finished material C. The finished material C can then be directly put into a plastic extruding or processing machine and then processed into finished products having a wood grain.

Referring to Figure 5, as an alternate form of the present invention, the base material B may be mixed with several different supplementary materials A1;A2;A3 in a mixer so as to obtained a finished material C having assorted color. These supplementary materials A1;A2;A3 are separately obtained in the same manner as shown in Figure 2, by mixing plastic resins with a specific powder pigment mixture in a different color. A plastic product made from the aforesaid finished material C has a wood grain showing striking differences between the lines and markings thereon.

As indicated, the present invention provides a method of preparing a grained plastic material assorted in color for making plastic products having a wood grain. However, it will be understood that various modifications and changes could be made without departing from the spirit and scope of the invention.

## Claims

1. A plastic material preparing method comprising steps of:
i) preparing a supplementary material by mixing plastic resins with a pigment powder of a dark color and then letting the mixture thus obtained be processed into a colored, grained supplementary material through a pilling machine;
ii) preparing a base material by mixing plastic resins with a pigment powder of a light color and then letting the mixture thus obtained be processed into a colored, grained base material through a pilling machine; and
iii) mixing said supplementary material with said base material into a grained plastic material assorted in color.

2. The method of claim 1 wherein said supplementary material and said base material are different in softness and melting point.

3. A plastic material preparing method comprising steps of:
i) preparing a plurality of supplementary materials by mixing plastic resins with pigment powder of different dark colors separately and then letting the mixtures thus obtained be separately processed into colored, grained supplementary materials through a pilling machine;
ii) preparing a base material by mixing plastic resins with a pigment powder of a light color and then letting the mixture thus obtained be processed into a colored, grained base material through a pilling machine; and
iii) mixing said supplementary materials with said base material into a grained plastic material assorted in color.
